Europäisches Patentamt

European Patent Office

Office européen des brevets

(11) Numéro de publication: **0 031 276**
**A1**

(12) **DEMANDE DE BREVET EUROPEEN**

(21) Numéro de dépôt: 80401767.1

(22) Date de dépôt: 09.12.80

(51) Int. Cl.³: **G 06 F 1/02**
**G 06 F 7/68**

(30) Priorité: 20.12.79 FR 7931272

(43) Date de publication de la demande:
01.07.81 Bulletin 81/26

(84) Etats Contractants Désignés:
BE DE GB IT NL SE

(71) Demandeur: **COMMISSARIAT A L'ENERGIE ATOMIQUE**
**Etablissement de Caractère Scientifique Technique et**
**Industriel**
**B.P. 510**
**F-75752 Paris Cedex 15(FR)**

(72) Inventeur: **Fruchart, Daniel**
**39, rue George Sand**
**F-91120 Palaiseau(FR)**

(72) Inventeur: **Travaillon, Raymond**
**8, rue Claude Debussy**
**F-91380 Chilly Mazarin(FR)**

(74) Mandataire: **Mongredien, André et al,**
**c/o Brevatome 25, rue de Ponthieu**
**F-75008 Paris(FR)**

(54) Générateur séquentiel d'impulsions à fréquence réglable et application de ce générateur à la simulation de profils d'irradiation ou de contamination en site nucléaire.

(57) L'invention concerne un générateur séquentiel d'impulsions à fréquence réglable.

Le générateur est caractérisé en ce qu'il comprend un diviseur (1) de fréquence réglable, alimenté par une horloge (2) et un dispositif (3) de mémorisation du profil de fréquence des impulsions délivrées par le diviseur, ce dispositif de mémorisation comprenant un ensemble de mémorisation (4) apte à enregistrer et à appliquer au diviseur de fréquence (1) un facteur de division de la fréquence des impulsions d'horloge et un circuit (5) d'adressage pas à pas de cet ensemble de mémorisation, chaque pas étant de durée réglable.

Application à la simulation de profils d'irradiation ou de contamination en site nucléaire.

FIG. 1

La présente invention concerne un générateur séquentiel d'impulsions à fréquence réglable ainsi qu'une application de ce générateur à la simulation de profils d'irradiation ou de contamination, en site nucléaire.

Il est souvent nécessaire, notamment dans le domaine nucléaire, de pouvoir comparer, dans un poste central de surveillance, les informations issues de capteurs de radioprotection par exemple, avec des valeurs de seuils préalablement enregistrées dans une mémoire de ce poste central. Les informations issues des différents capteurs sont envoyées vers le poste central, sous forme d'impulsions qualifiées d'impulsions de balise. Le poste central compare les valeurs de ces informations aux valeurs de seuil mises en mémoire, déclenche des signaux sonores ou lumineux en cas de dépassement de seuils ou pour des variations trop rapides de ces valeurs. Un calculateur, associé au poste central traite un nombre très important de voies de surveillance et une vérification systématique des traitement effectués par le poste central et notamment des passages de seuil est très utile pour déceler toute anomalie du poste central. Pour effectuer cette vérification l'emploi de sources de rayonnements ne peut couvrir toute la dynamique de mesure du fait du danger présenté par ces sources. On peut, au contraire utiliser une simulation dans laquelle les impulsions balises, au lieu d'être transmises par les capteurs, sont créées artificiellement grâce à un générateur séquentiel d'impulsions à fréquence variable conforme à l'invention. Ces impulsions sont générées séquentiellement à partir d'un profil d'irradiation ou de contamination préalablement tracé. Ainsi, la courbe de réponse du traitement effectué par le poste central peut être comparée au profil théorique préalablement établi.

On ne connaît pas actuellement de générateur séquentiel d'impulsions à fréquence réglable permettant de délivrer des impulsions dont le niveau et la durée sont fixes, mais dont la fréquence de répétition varie selon un profil prédéterminé.

L'invention a pour but de remédier à cet inconvénient et notamment de réaliser un générateur séquentiel d'impulsions à fréquence réglable délivrant des impulsions de niveau et de durée fixes, mais dont la fréquence de répétition varie selon un programme ou un profil prédéterminés.

L'invention a pour objet un générateur séquentiel d'impulsions à fréquence réglable, caractérisé en ce qu'il comprend un diviseur de fréquence réglable alimenté par une horloge et un dispositif de mémorisation du profil de fréquence des impulsions délivrées par le diviseur, ce dispositif de mémorisation comprenant un ensemble de mémorisation apte à enregistrer et à appliquer au diviseur de fréquence un facteur de division de la fréquence des impulsions d'horloge et un circuit d'adressage pas à pas de cet ensemble de mémorisation, chaque pas étant de durée réglable.

Selon une autre caractéristique de l'invention, le circuit d'adressage pas à pas comprend une mémoire d'adressage, des moyens d'incrémentation d'adresse, pas à pas, de cette mémoire d'adressage et un générateur d'impulsions de durées réglables, dont la sortie est reliée à une entrée de commande des moyens d'incrémentation d'adresse.

Selon une autre caractéristique, l'ensemble de mémorisation comprend une première mémoire de commande apte à enregistrer une valeur décimale du facteur de division et une deuxième mémoire de commande apte à enregistrer les exposants de puissance de 10 de ce facteur de division.

Selon une autre caractéristique, le diviseur de fréquence comprend au moins un compteur binaire codé décimal dont une entrée est reliée à la sortie de l'horloge, un codeur binaire codé décimal-décimal dont les entrées sont reliées à la sortie du compteur et dont les sorties sont reliées à des entrées "décimales" d'un multiplexeur, d'autres entrées codées binaires de ce multiplexeur étant reliées à des sorties de la première mémoire de commande, ce multiplexeur étant de type "à entrées binaires et à entrées décimales", la sortie de ce multiplexeur étant reliée à l'entrée d'un diviseur de fréquence programmable apte à diviser la fréquence des impulsions reçues du multiplexeur, par des puissances de 10, des entrées de commande de ce diviseur programmable étant reliées à des sorties de la deuxième mémoire de commande, la sortie de ce diviseur délivrant lesdites impulsions à fréquence réglable.

Selon une autre caractéristique, le générateur comprend en outre un circuit de mise en forme des impulsions de sortie du diviseur de fréquence.

Selon une autre caractéristique, les mémoires de commande et la mémoire d'adressage sont des mémoires reprogrammables électriquement.

Enfin, selon une autre caractéristique, le générateur de l'invention s'applique à la simulation de profils d'irradiation ou de contamination en site nucléaire, chaque fréquence des impulsions du générateur correspondant à un débit de dose d'irradiation, ou à une contamination atmosphérique.

D'autres caractéristiques et avantages de l'invention ressortiront mieux de la description qui va suivre, donnée en référence aux figures schématiques annexées dans lesquelles :

- la figure 1 représente schématiquement un générateur séquentiel d'impulsions à fréquence réglable, conforme à l'invention ;

- la figure 2 est un diagramme d'un profil d'irradiation, représentant en exemple un débit de doses d'irradiation par des électrons ou des photons par exemple, en fonction du temps.

- la figure 3 est un diagramme représentant un profil de contamination C, qui exprime les variations du taux de comptage $\underline{n}$, exprimé en chocs par seconde en fonction du temps t.

- la figure 4 représente un profil théorique d'irradiation,

- la figure 5 représente un profil théorique de contamination.

B 6795-3 DC

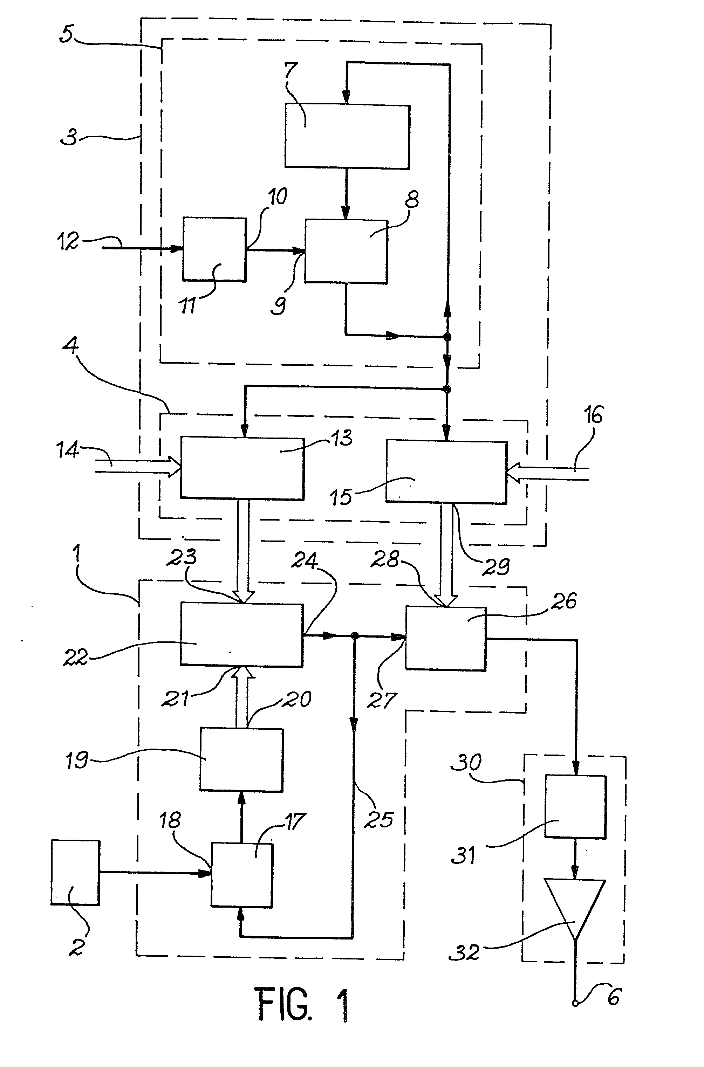

En référence à la figure 1, on a représenté schématiquement un générateur séquentiel d'impulsions à fréquence réglable, conforme à l'invention. Ce générateur comprend un diviseur 1 à fréquence réglable, alimenté par une horloge 2 et un dispositif 3 de mémorisation du profil de fréquence des impulsions délivrées par le diviseur 1. Ce dispositif de mémorisation comprend un ensemble de mémorisation 4 permettant d'enregistrer et d'appliquer au diviseur de fréquence 1 un facteur de division de la fréquence des impulsions d'horloge 2 ; le dispositif de mémorisation 3 comprend également un circuit 5 d'adressage, pas à pas, de l'ensemble de mémorisation 4. Comme on le verra par la suite, chaque pas d'adresse est de durée réglable et le circuit d'adressage 5 permet de régler cette durée et de commander le déroulement du programme des impulsions à la sortie 6 du générateur. Pendant toute la durée d'un pas d'adresse, la fréquence à la sortie 6 du circuit 32 est fixe. Ce circuit d'adressage comprend une mémoire 7 reprogrammable, à 256 pas de programme par exemple, permettant d'adresser de façon cyclique l'ensemble de mémorisation 4. Cette mémoire reprogrammable 7 est adressée de façon cyclique grâce à des moyens d'incrémentation d'adresses 8, pas à pas ; ces moyens d'incrémentation présentent une entrée de commande 9, reliée à la sortie 10 d'un générateur 11 d'impulsions de durée réglable ; on a représenté en 12 une entrée de réglage de la durée des impulsions délivrées par le générateur 11. Les moyens d'incrémentation 8 peuvent être constitués par exemple, par un basculeur de type D, connu dans l'état de la technique. La durée du passage d'une adresse à l'adresse suivante de la mémoire 7, ou pas d'adressage, est fixée par les impulsions fournies par le générateur 11 ; le basculeur D permet d'incrémenter successivement les adresses de la mémoire 7, une à une. L'ensemble de mémorisation 4 comprend une première mémoire de commande 13 apte à enregistrer, par ses entrées 14, une valeur décimale du facteur de division à appliquer à la fréquence des impulsions de sortie de l'horloge 2. Cet ensemble de mémorisation comprend également une mémoire 15 apte à enregistrer par ses entrées 16 les exposants de puissance de 10, de ce facteur de division.

Bien entendu, l'introduction de ces informations dans les mémoires 13 et 15 qui sont de type reprogrammable, ainsi que la commande des moyens 11, sont effectuées par des moyens non représentés, connus dans l'état de la technique. Ainsi, si l'horloge 2 fournit des impulsions de fréquence $F$ et que le générateur délivre des impulsions de sortie de fréquence $F_b$, le rapport :

$$d = \frac{F}{F_b}$$

représente le facteur de division de la fréquence $F$ des impulsions d'horloge ; ce facteur de division est appliqué au diviseur 1 grâce aux informations binaires préalablement enregistrées dans les mémoires 13 et 15. Ainsi, par exemple, si le facteur de division $d$ a pour valeur $14.10^6$, la valeur décimale 14 de ce facteur de division est enregistrée sous forme d'informations binaires dans la mémoire 13, tandis que l'exposant 6 de la puissance de 10, est enregistré sous forme binaire dans la mémoire 15. Le diviseur de fréquence 1 comprend au moins un compteur décimal 17 dont une entrée 18 est reliée à la sortie de l'horloge 2 et un codeur décimal-binaire 19 dont une entrée est reliée à la sortie du compteur 17 ; ce codeur permet de coder en valeurs décimales, le nombre des impulsions d'horloge enregistrées par le compteur 17, pendant la durée de chaque pas d'adressage, fixée par le circuit 5. Les sorties 20 du codeur 19 sont reliées aux entrées 21 d'un multiplexeur 22. Ce multiplexeur reçoit sur d'autres entrées 23 la valeur décimale du facteur de division $d$, enregistrée sous forme d'informations binaires dans la première mémoire de commande 13. Ce multiplexeur, qui est de type "à entrée binaire et à entrée décimale" délivre sur sa sortie 24 des impulsions dont la valeur décimale de la fréquence correspond à la division de la fréquence des impulsions de l'horloge 2, par la valeur décimale du facteur de division $d$. Une boucle 25 permet la remise à zéro du compteur 17 à la fin de chaque pas d'incrémentation d'adresse de la mémoire 13. Le diviseur de fréquence 1 comprend également un diviseur de fréquence programmable 26 dont une entrée 27 reçoit les impulsions de sortie 24 du multiplexeur 22. Ce diviseur programmable présente des entrées de commande 28 reliées aux sorties de la deuxième mémoire de commande 15 ; il est constitué de manière connue et permet de diviser par des puissances de 10 la fréquence des impulsions qu'il reçoit. C'est ainsi que dans l'exemple considéré, si la fréquence des impulsions provenant du multiplexeur 22 doit être divisée par $10^6$, l'exposant 6 de la puissance 10 est enregistré sous forme binaire dans la mémoire 15 qui commande par ses sorties 29 le diviseur de fréquence 26. Enfin, le générateur comprend un circuit de mise en forme 30 des impulsions de sortie du diviseur de fréquence réglable 1 ; ce circuit de mise en forme peut être constitué par une bascule monostable 31, associée à un amplificateur de sortie 32.

Le fonctionnement du générateur qui vient d'être décrit sera mieux compris dans le cadre de son application à la simulation de profils d'irradiation ou de contamination en site nucléaire.

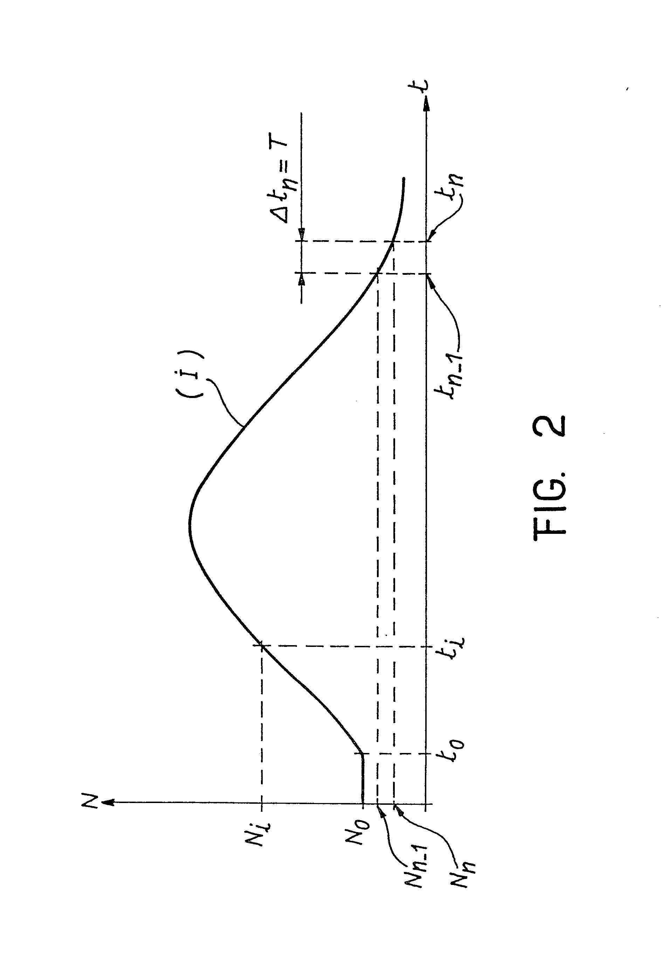

La figure 2 est un diagramme représentant un profil d'irradiation I. Ce profil représente, en fonction du temps, un débit de doses maximales admissibles, dû à l'irradiation par exemple, par des électrons ou des photons. On suppose qu'au temps $t_0$ correspond un débit de dose $N_0$, tandis qu'au temps $t_n$ correspond un débit de doses $N_n$. À chaque instant, la valeur du débit de doses est donc connue et l'on peut faire correspondre à chacune de ces valeurs un certain nombre d'impulsions quantifiées d'impulsions-balise, de fréquence $F_b$. En site nucléaire, les impulsions-balise sont délivrées par des capteurs. Mais il est possible, pour les besoins du contrôle et de la maintenance de simuler ces impulsions-balise qui sont alors délivrées par le générateur de l'invention, à partir d'un profil d'irradiation. A titre d'exemple, chaque impulsion-balise correspond à un équiva-

lent de dose de 10μ.rem ; la limite maximale admissible, en débit de dose étant voisine de 2500μ.rem par heure, il en résulte que la limite maximale admissible de débit de doses peut se traduire par $6,94.10^{-2}$ impulsions-balise/seconde. La durée du profil I, représenté sur le diagramme de la figure 2, est divisée en n intervalles de temps égaux ; à chaque intervalle de temps de durée $\Delta t_n$, correspond une fréquence d'impulsions-balise $F_b$ qui est déterminée en fonction du débit de doses maximales admissibles $N_n$.

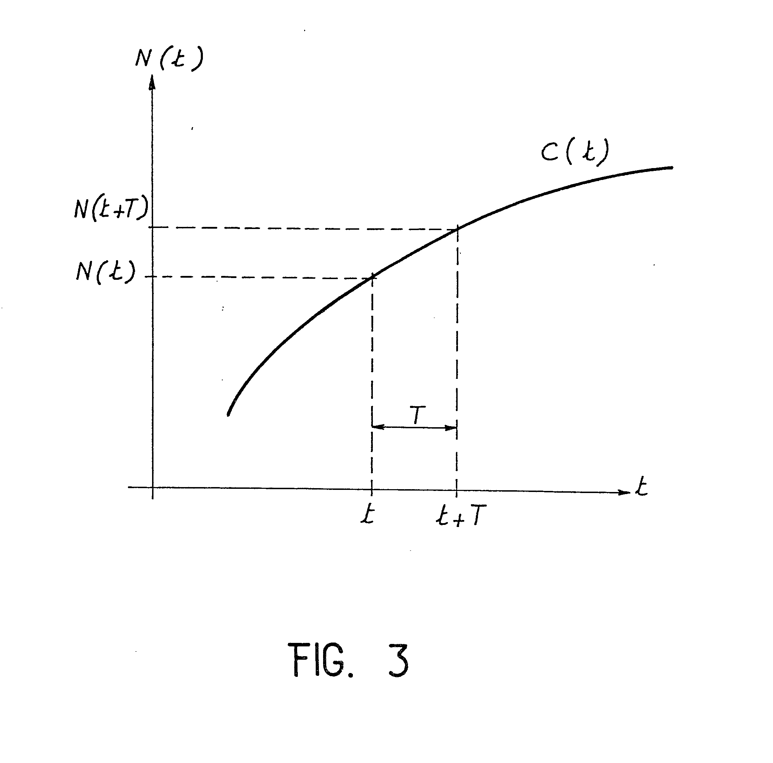

La figure 3 est un diagramme représentant un profil de contamination C. Ce diagramme exprime les variations du taux de comptage $N_{(t)}$ des particules exprimé en chocs par seconde, en fonction du temps t. L'équation qui lie ce taux de comptage à la concentration maximale admissible, est de la forme :

$$N_{(t)} = N_0 + \int_0^t C.Ca.\frac{d}{3600} . 3,7.10^{10}.Rf.Rd.dt$$

Dans cette relation :

- C désigne le niveau de contamination de l'air exprimé en nombre de concentrations maximales admissibles,
- Ca désigne la concentration maximale exprimée en $Ci/m^3$,
- d désigne le débit de l'air en $m^3/heure$,
- Rd.Rf représente le produit des rendements de détection et de filtrage des particules détectées.

Si l'on désigne par α le produit :

$$Ca. \frac{d}{3600} . 3,7.10^{10} Rd.Rf,$$

et si l'on prend :

$$\alpha = 1,$$
$$Rd.Rf = 0,3,$$
$$d = 6 \ m^3/heure,$$

alors :

$$Ca = \frac{3600}{3,7.10^{10} . 6.0,3} = 5,4.10^{-2} \mu Ci/m^3,$$

si α = 1 alors :

$$N_t = N_0 + \int_0^t C.dt.$$

B 6795-3 DC

En dérivant cette expression :

$$\frac{dN}{dt} = C_{(t)} \cdot$$

Il en résulte qu'en choisissant des accroissements ΔN et Δt suffisamment faibles, le niveau $C_{(t)}$ de contamination de l'air à un instant t peut s'exprimer sous la forme :

$$C_{(t)} = \frac{\Delta N}{\Delta t} \cdot$$

Si l'on désigne par T la période d'échantillonnage Δt, on obtient :

$$C_{(t)} = \frac{\Delta N}{T} \cdot$$

Cette relation montre que la contamination C est proportionnelle à l'accroissement du débit de doses ΔN, pour une période d'échantillonnage T fixe ; et que la valeur de cette contamination est inversement proportionnelle à la période d'échantillonnage T, pour un accroissement constant du débit de doses ΔN.

Il résulte de ces observation des variations de la contamination, en fonction du temps, consiste à générer des périodes d'échantillonnage correspondant respectivement à une certaine fréquence d'impulsions. Dans l'exemple de réalisation du générateur conforme à l'invention, la simulation consiste à générer 256 périodes d'échantillonnage auxquelles correspondent respectivement des fréquences d'impulsions-balise. Cette période d'échantillonnage est fixée grâce au circuit d'adressage 5 de la figure 1, tandis que la fréquence est déterminée grâce au circuit diviseur 1, alimenté par l'horloge 2, et commandé par l'ensemble de mémorisation 4.

Ainsi, dans le cas d'un profil de contamination, pour chaque période d'échantillonnage T correspond une fréquence $F_b$ des impulsions-balise, générée à partir du profil représenté sur la figure 3. Dans l'exemple de réalisation décrit, la durée du pas de l'adressage réalisé grâce au circuit 5, peut être réglée de 1 à 32 secondes. La mémoire d'adressage 7 est une mémoire à 256 adresses, tandis que l'horloge 2 délivre des impulsions de fréquence de $F_0 = 1$ Mhertz. Ces impulsions traversent le diviseur 1 où leur fréquence est divisée d'un facteur $\underline{d}$ prédéterminé ; à

la sortie du générateur, les impulsions dont la fréquence a été divisée par le facteur $\underline{d}$, ont une fréquence $F_b$. Comme décrit plus haut, le facteur de division est obtenu par la programmation des mémoires 13 et 15. Le circuit de mise en forme 30, et notamment la bascule monostable 31, permettent de rendre ces impulsions identiques à celles produites par des capteurs de radioprotection. Grâce aux 256 pas de programme, le profil de simulation peut être généré durant un temps pouvant aller de 256 secondes à 256 x 32 = $2^{13}$ secondes, puisque les pas d'adressage de la mémoire 7 peuvent varier de 1 à 32s.

Le générateur, dans ce mode particulier d'application, permet de générer des impulsions-balise d'amplitude fixe et de fréquence réglable, par une modification des informations inscrites dans les mémoires 13 et 15 qui permettent de fixer la valeur du facteur de division $\underline{d}$, ainsi que par une modification de la durée d'adressage de chacune de ces mémoires.

Dans cette application particulière, la première opération consiste à tracer le profil $C = f(a_t)$. Dans cette relation, C désigne le débit de doses, tandis que $\underline{a}$ désigne le numéro de l'adresse dans les mémoires 13 et 15, ce numéro étant lui-même fonction du temps. Le nombre C représentant le débit de doses étant déterminé pour chaque adresse, on lui fait correspondre une certaine fréquence $F_b$. Connaissant la fréquence $F_b$ des impulsions-balise à obtenir en sortie du générateur à chaque instant, ainsi que la fréquence $F_0$ (1 Mhertz) des impulsions de l'horloge 2, il en résulte que le facteur de division a pour valeur :

$$d = \frac{10^6}{F_b}.$$

De même, si C' désigne la contamination exprimée en nombre de contaminations maximales admissibles :

$$C' = f(at)$$

$$c'_t = \frac{\Delta N}{T} = \frac{N_{(t+T)} - N_t}{T} .$$

Le facteur de division à l'instant t est :

$$d_t = \frac{10^6}{N_t} ,$$

et le facteur de division à l'instant t + T est :

$$d_{t+T} = \frac{10^6}{N_{(t+t)}} .$$

Le facteur de division peut donc être inscrit dans les mémoires 13 et 15 ; la partie décimale est inscrite dans la mémoire 13, tandis que l'exposant de la puissance de 10 de ce facteur est inscrit dans la mémoire 15. L'inscription dans les mémoires du générateur peut se faire soit manuellement, adresse par adresse, soit par l'intermédiaire du clavier d'un dispositif de programmation automatique tel que par exemple un lecteur de bandes perforées ou un lecteur de bandes magnétiques.

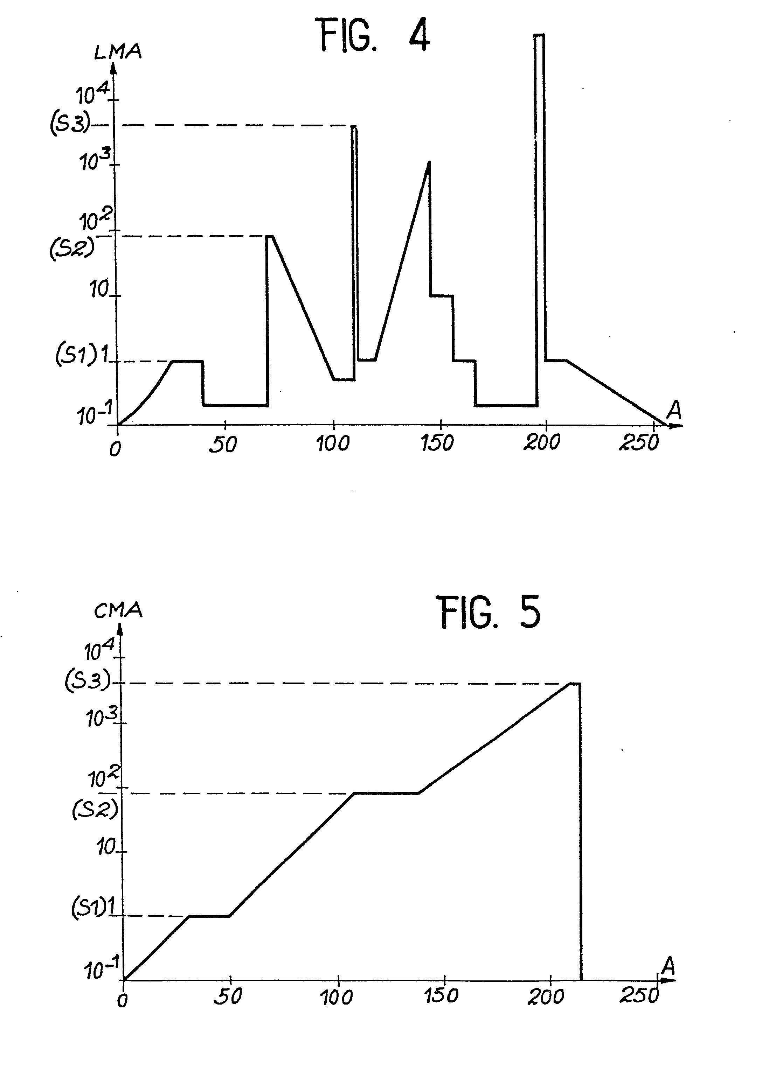

La figure 4 est un diagramme qui représente un profil théorique d'irradiation. Sur ce diagramme, les ordonnées représentent la limite de doses maximales admissibles (LMA), les abscisses sont les adresses (A). Les variations de doses maximales admissibles correspondent à l'évolution de la fréquence des impulsions du générateur dans les mémoires 13 et 15. $S_1$, $S_2$, $S_3$ sont des seuils d'irradiation.

La figure 5 est un diagramme représentant un profil théorique de contamination. Sur ce diagramme, les ordonnées représentent les concentrations maximales admissibles (CMA), les abscisses représentent les adresses (A) dans les mémoires 13 et 15. $S_1$, $S_2$, $S_3$ sont des seuils de contamination.

Les variations de concentrations maximales correspondent à l'évolution de la fréquence des impulsions délivrées par le générateur.

Il est bien évident que le générateur qui vient d'être décrit trouve une application particulièrement inté-

B 6795-3 DC

ressante dans la génération de profils d'irradiation ou de contamination, mais il pourrait être utilisé dans toute autre application.

B 6795-3 DC

REVENDICATIONS

1. Générateur séquentiel d'impulsions à fréquence réglable, comprenant un diviseur de fréquence réglable alimenté par une horloge et un dispositif de mémorisation du profil de fréquence des impulsions délivrées par le diviseur, caractérisé en ce que le dispositif de mémorisation comprend un ensemble de mémorisation apte à enregistrer et à appliquer au diviseur de fréquence un facteur de division de la fréquence des impulsions d'horloge et un circuit d'adressage pas à pas, de cet ensemble de mémorisation, chaque pas étant de durée réglable.

2. Générateur selon la revendication 1, caractérisé en ce que le circuit d'adressage pas à pas comprend une mémoire d'adressage, des moyens d'incrémentation d'adresses, pas à pas, de cette mémoire d'adressage et un générateur d'impulsions de durées réglables, dont la sortie est reliée à une entrée de commande des moyens d'incrémentation d'adresses.

3. Générateur selon la revendication 2, caractérisé en ce que l'ensemble de mémorisation comprend une première mémoire de commande apte à enregistrer une valeur décimale du facteur de division et une deuxième mémoire de commande apte à enregistrer l'exposant des puissances de 10 de ce facteur de division.

4. Générateur selon la revendication 3, caractérisé en ce que le diviseur de fréquence comprend au moins un compteur binaire codé décimal dont une entrée est reliée à la sortie de l'horloge, un codeur binaire codé décimal-décimal dont les entrées sont reliées à la sortie du compteur et dont les sorties sont reliées à des entrées décimales d'un multiplexeur, d'autres entrées codées binaires de ce multiplexeur étant reliées à des sorties de la première mémoire de commande, ce multiplexeur étant de type "à entrées binaires et à entrées décimales", la sortie de ce multiplexeur étant reliée à l'entrée d'un diviseur de fréquence programmable apte à diviser la fréquence des impulsions reçues du multiplexeur, par des puissances de 10, des entrées de commande de ce diviseur programmable étant reliées à des sorties de la deuxième mémoire de commande, la sortie de ce diviseur programmable délivrant lesdites impulsions à fréquence réglable.

5. Générateur selon la revendication 4, caractérisé en ce qu'il comprend en outre un circuit de mise en forme des impulsions de sortie du diviseur de fréquence.

6. Générateur selon la revendication 3, caractérisé en ce que les mémoires de commande et la mémoire d'adressage sont des mémoires reprogrammables électriquement.

7. Application du générateur conforme à l'une quelconque des revendications 1 à 6, à la simulation de profils d'irradiation ou de contamination en site nucléaire, chaque fréquence des impulsions du générateur correspondant à un débit de dose d'irradiation ou de contamination à un instant prédéterminé.

B 6795-3 DC

0031276

FIG. 1

FIG. 2

FIG. 3

FIG. 4

FIG. 5

Office européen
des brevets

**RAPPORT DE RECHERCHE EUROPEENNE**

Numéro de la demande

EP 80 40 1767

| Catégorie | DOCUMENTS CONSIDERES COMME PERTINENTS | Revendica-tion concernée | CLASSEMENT DE LA DEMANDE (Int. Cl.³) |
|---|---|---|---|
| | Citation du document avec indication, en cas de besoin, des parties pertinentes | | |
| | US - A - 3 551 826 (SEPE)  * colonne 6, lignes 20-25; figures 5 et 6 *  --- | 1 | G 06 F 1/02 G 06 F 7/68 |
| | US - A - 3 493 872 (SEPE)  * figure 1; colonne 5, lignes 20-21 *  --- | 1 | |
| | FR - A - 2 315 803 (TAKEDA)  * pages 19 à 21 *  --- | 1-2 | DOMAINES TECHNIQUES RECHERCHES (Int. Cl.³) |
| | US - A - 3 939 459 (HOOPES)  * figure 3; colonne 5, ligne 46 - colonne 9, ligne 46 *  --- | 1-2 | G 06 F 1/02 G 06 F 7/68 H 03 B 23/00 |
| | US - A - 3 435 196 (SCHMID)  * colonne 5, lignes 50-58 *  --- | 1-2 | |
| | US - A - 3 831 015 (HOFF)  * figure 1; colonne 1, ligne 67 - colonne 3, ligne 8 *  --- | 2 | CATEGORIE DES DOCUMENTS CITES |
| | FR - A - 2 198 190 (KOLLSMAN)  * page 3, lignes 9-24; page 12, lignes 31-36; page 13, lignes 21-38; page 14, ligne 19 - page 15, ligne 8; figures 1,6, 7 * ------- | 1-3 | X: particulièrement pertinent A: arrière-plan technologique O: divulgation non-écrite P: document intercalaire T: théorie ou principe à la base de l'invention E: demande faisant interférence D: document cité dans la demande L: document cité pour d'autres raisons |

&: membre de la même famille,
document correspondant

X | Le present rapport de recherche a été établi pour toutes les revendications

| Lieu de la recherche | Date d'achèvement de la recherche | Examinateur |
|---|---|---|
| La Haye | 02-03-1981 | GUIVOL |

OEB Form 1503.1  06.78